# EUROPÄISCHE PATENTSCHRIFT

(11) **EP 2 050 975 B1**
(45) Veröffentlichungstag und Bekanntmachung des Hinweises auf die Patenterteilung: **25.07.2012**
(21) Anmeldenummer: 07118725.6
(22) Anmeldetag: 17.10.2007
(51) Int. Cl.: F16D 1/091, B23P 11/02

(54) **Vorrichtung zur reibschlüssigen Kupplung zweier koaxialer Bauteile**
Device for a friction coupling of two coaxial components
Dispositif d'accouplement à friction de deux composants coaxiaux

(43) Veröffentlichungstag der Anmeldung: 22.04.2009
(73) Patentinhaber: Wernecke, Jan, 6467 Schattdorf (CH)
(72) Erfinder: Wernecke, Jan, 6467 Schattdorf (CH)
(74) Vertreter: Schneider Feldmann AG Patent- und Markenanwälte

(56) Entgegenhaltungen:
- DE-A1- 3 145 521
- DE-U1- 20 103 344
- GB-A- 2 026 650
- US-A- 2 840 399
- US-A- 5 374 135

## Beschreibung

### Technisches Gebiet

Die Erfindung betrifft eine Vorrichtung zur reibschlüssigen Kupplung zweier koaxialer Bauteile, gemäss dem Oberbegriff des unabhängigen Patentanspruchs, sowie ein Verfahren zur Montage und Demontage einer solchen Kupplung.

### Stand der Technik

Für die drehfeste Verbindung von zwei koaxialen Bauteilen, beispielsweise von zwei Wellen oder einer Welle und einer Nabe, sind verschiedene Möglichkeiten bekannt. Um eine einfache und schnelle Montage, Wartung und Demontage zu ermöglichen, müssen solche Verbindungen zudem zerstörungsfrei lösbar sein.
Verbreitet sind unter anderem reibschlüssige Verbindungen mittels eines konischen Ölpressverbands. Bei diesem wird beispielsweise eine Nabe mit einer kegelförmigen Innenbohrung auf eine Welle mit einer kegelförmigen Mantelfläche aufgepresst, wobei in den Zwischenspalt Öl eingepresst wird, wodurch das Aussenstück elastisch aufgeweitet wird, so dass es auf den inneren Kegel geschoben werden kann. Nach Erreichen der gewünschten Position wird der Öldruck im Spalt abgelassen, wodurch sich das Aussenstück zusammenzieht und auf das Innenstück setzt. Aufgrund der anhaltenden elastischen Verformung des Aussenstücks resultiert ein Anpressdruck zwischen den Kontaktflächen des Innenstücks und des Aussenstücks. Das maximal mit einem solchen Ölpressverband übertragbare Drehmoment ist proportional zu diesem Anpressdruck, der Kontaktfläche, und dem Haftreibungskoeffizienten zwischen den Flächen.

Die US-2 840 399 zeigt eine solche Vorrichtung zum Anbringen von Zahnrädern an Wellenenden mit kegelförmigen Mantelflächen. Zwar erfolgt hier das Aufbringen der Zahnradnabe auf das konische Ende der Welle unter Aufweitung der Zahnradnabe mittels Öldruck, die Zahnradnabe muss aber ebenfalls eine entsprechende konische Innenbohrung aufweisen. Ölhydraulische Mittel zum Aufschieben der Zahnradnabe auf die Welle sind in dieser Schrift nicht offenbart und die technische Lehre lässt sich auch nicht auf die Verbindung zweier koaxialer Wellen anwenden.

Die Fertigung von Wellen mit kegelförmigern Zapfen und Naben mit konischer Innenbohrung ist aufwendig und teuer, und bei einer fehlerhaften Fertigung kann das gesamte, mitunter sehr grosse und schwere Bauteil unbrauchbar werden. Zudem werden oft die zu verbindenden Bauteile von verschiedenen Herstellern geliefert, was eine präzise Koordination voraussetzt. Es ist deshalb oft kostengünstiger, die beiden Bauteile mit zylindrischen Innen- bzw. Aussenflächen zu versehen, und diese mittels einer entsprechenden Ölpressverband-Kupplungsvorrichtung zu verbinden. Eine solche besteht aus einer inneren Hülse, mit zylindrischem Innenmantel und kegelförmigem Aussenmantel, und einer äusseren Hülse, mit kegelförmigem Innenmantel und zylinderförmigem Aussenmantel. Die äussere Hülse wird dann auf die innere Hülse aufgepresst, wodurch eine reibschlüssige Verbindung zum einen zwischen beiden Hülsenteilen und zum anderen zwischen innerer Hülse und Welle bzw. äusserer Hülse und Nabe entsteht. Gegebenenfalls wird auch nur die innere oder die äussere Hülse verwendet, die dann direkt mit der Kegelfläche des anderen Bauteils zusammenwirkt. Analog wird eine Kupplungsvorrichtung mit innerer und äusserer Hülse auch zur reibschlüssigen Verbindung zweier koaxialer Wellen mit zylindrischen Zapfen verwendet, wobei die innere Hülse über den sich gegenüber liegenden Wellenenden angeordnet wird, so dass nach dem Aufpressen der äussem Hülse die beiden Wellen reibschlüssig mit der Kupplungsvorrichtung, und damit miteinander, verbunden sind. Konische Ölpressverbandkupplungen der vorgenannten Art werden beispielsweise von der Firma Voith Turbo, Heidenheim, Deutschland unter der Bezeichnung "Hycon" angeboten.
Das Aufpressen der konischen Nabe bzw. der äusseren Hülse auf das konische Innenstück erfolgt bevorzugt mittels eines Hydraulikwerkzeugs, welches das äussere konische Teil in Richtung des zunehmenden Umfangs auf den inneren Kegel schieben oder ziehen kann. Um das äussere Bauteil und gegebenenfalls die äussere Hülse aufzuweiten, wird hydraulisch Öl in den Kegelspalt gepresst, so dass die beiden Kegelflächen nicht mehr aufeinander aufliegen. Der entsprechende Ölspaltdruck resultiert in einer Axialkraft in Richtung des abnehmenden Umfangs des inneren Kegels. Diese ist das Produkt aus Ölspaltdruck und Projektion der Kegelmantelfläche entlang der Längsrichtung. Ein solches hydraulisches Werkzeug ist beispielsweise in EP 1775490 A1 gezeigt, in dem eine hydraulischen Mutter auf eine Welle aufgeschraubt wird, und mittels eines druckbeaufschlagten Ringkolbens ein Wälzlager auf ein konisches Wellenende aufpresst.
Es sind auch Systeme bekannt, in welchen das hydraulische Werkzeug in die Kupplungsvorrichtung integriert ist. So bietet beispielsweise SKF Coupling Systems AB, Hofors, Schweden, unter der Bezeichnung "OKC" und "OKF" eine solche Kupplungsvorrichtung an. Diese besteht aus konischer Innenhülse, konischer Aussenhülse und einem Ringkolben, welcher am schmalen Ende mit der inneren Hülse verbunden ist, und zusammen mit der äusseren Hülse eine Hydraulikkammer bildet.

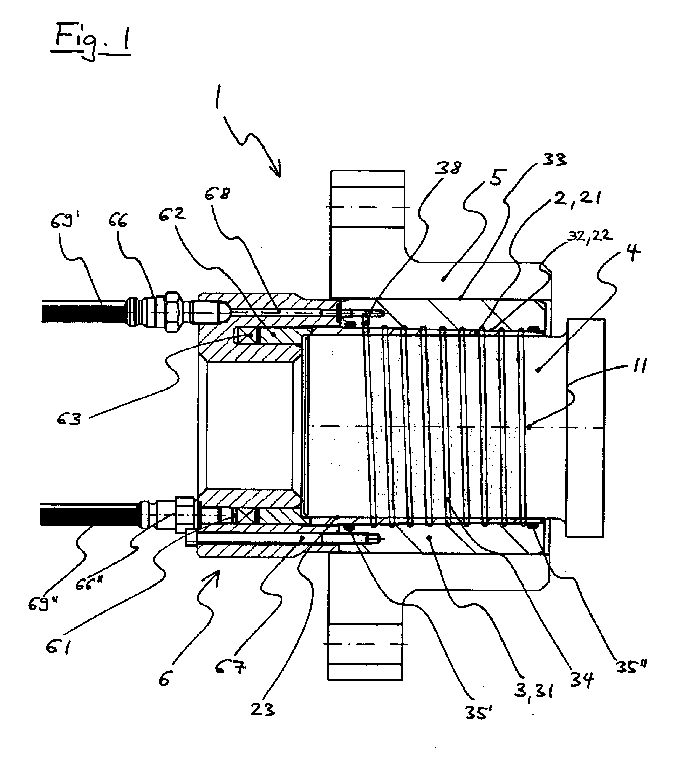

Figur 1 zeigt zur Erläuterung eine Schnittansicht einer Kupplungsvorrichtung, wie sie aus dem Stand der Technik bekannt ist. Zum Aufpressen einer Nabe 5 auf eine Welle 4 wird ein erstes, inneres Kupplungsteil 2 in Form einer inneren Hülse in einem zweites äusseren Kupplungsteil 3 in Form einer äusseren Hülse 31 angeordnet, und diese mittels Schrauben 67 formschlüssig mit dem Hydraulikwerkzeug 6 verbunden. Im Hydraulikwerkzeug 6 ist ein Ringkolben 62 mit einer Dichtung 63 angeordnet, welcher sich noch in der eingefahrenen Position befindet. Ringkolben 62 und der Körper des Hydraulikwerkzeugs 6 bilden eine ringförmige Hydraulikkammer 61. Der Ringkolben 62 liegt auf der inneren Hülse 21 auf. Zur Montage wird nun die Nabe 5 auf die äussere Hülse 31 aufgebracht, und die Welle 4 in die innere Hülse 21-eingefahren. Über eine Hydraulikzufuhrleitung 69" wird nun die Hydraulikkammer 62 mit einem Druck *p*ₐₓ beaufschlagt, wodurch eine axial nach links wirkende Kraft auf das Hydraulikwerkzeug 6 und damit auf die äussere Hülse 31 erzeugt wird. Über eine zweite Hydraulikzufuhrleitung 69' und Hydraulikleitung 68, 38 wird anschliessend eine helixförmige Verteilnut 34 auf der kegelförmigen Innenfläche 33 der äusseren Hülse 31 mit einem Druck *p*ₛₚ beaufschlagt, so dass zwischen den Kegelflächen 22, 32 ein Ölspatt entsteht, und die äussere Hülse 31, zusammen mit der Nabe 5, elastisch aufgeweitet wird. Die äussere Hülse 31 schwimmt nun auf der inneren Hülse 21 auf, und verschiebt sich aufgrund der nach links wirkenden Zugkraft des Hydraulikwerkzeugs nach links, bis sich die Zugkraft und die dieser entgegen wirkende Kraft aufgrund des Ölspalts entsprechen. Die zwei Hydraulikdruckwerte *p*ₐₓ und *p*ₛₚ werden nun solange abwechslungsweise erhöht, bis die Nabe 5 die gewünschte Endposition erreicht hat. Der Ölspalt-Druck wird abschliessend abgelassen, wodurch sich die äussere Hülse 31 zusammenzieht, und auf die innere Hülse 21 setzt. Nach einer gewissen Wartezeit ist der Spalt zwischen den Kegelflächen 22, 32 ölfrei, und der axiale Hydraulikdruck wird abgelassen. Es resultiert ein reibschlüssiger Presssitz der Nabe 5 und der beiden Hülsen 31, 21 auf der Welle 4. Das Hydraulikwerkzeug 6 kann anschliessend entfernt werden. Die Demontage verläuft im wesentlichen umgekehrt.

Bei den bekannten konischen Ölpressverband-Kupplungsvorrichtungen kann es beim Ablassen des Ölspaltdrucks nach Erreichen der Endposition geschehen, dass aufgrund der sinkenden axialen Kraft des Ölspaltdrucks bei gleich bleibender Zugkraft die Hülse 31 noch einmal sprungartig nach links verrutscht, was zum einen zu einer Überschreitung der Toleranzen für die Dehnung von äusserer Hülse 31 und Nabe 5 führen kann, und zum anderen zu einem nicht senkrechten, unkontrollierten Setzen der Kegelflächen 22, 32 aufeinander, was eine Beschädigung der Oberflächen verursachen kann, Dabei können Kratzer entstehen, welche die Leckage an den Spaltenden vergrössem, was sogar dazu führen kann, dass der nötige Ölspaltdruck für eine spätere Demontage nicht mehr erreicht werden kann. Die Kupplungsvorrichtung lässt sich in einem solchen Fall nicht mehr zerstörungsfrei lösen. Das gleiche Problem kann auch bei der Demontage einer Kupplungsvorrichtung auftreten, wobei die äussere Hülse 31 beim Erhöhen des Ölspaltdrucks in beide Richtungen verrutschen kann, je nachdem, ob die Kraft des Hydraulikwerkzeugs zu gross oder zu klein ist.
Da bei unregelmässig geformten Aussenteilen, insbesondere bei Naben 5, die radiale Elastizität über die Länge nicht identisch ist, kann es sein, dass der Ölspalt aufgrund der unterschiedlichen Anpresskräfte unregelmässig dick wird. In solchen Fällen werden vorteilhaft an den beiden Enden der äusseren Hülse 31 umlaufende Dichtungen 35', 35" angeordnet, um die Leckage an den Spaltenden zu minimieren, und so einen höheren Ölspaltdruck zu erreichen.
Bei anderen bekannten konischen Ölpressverband-Kupplungsvorrichtungen wird zur Erhöhung des Haftreibungskoeffizienten die innere Hülse 21 beschichtet, womit eine Erhöhung des Haftreibungskoeffizienten von µ=0.14 (Stahl/Stahl) bzw. µ=0.18 (Stah/Stahl entfettet) auf bis µ=0.3 möglich wird. Dieser verbesserte Wert erlaubt die Übertragung grösserer Drehmomente bzw. die kleinere Auslegung von Kupplungsvorrichtungen. Beim Aufpressen der äusseren Hülse, und insbesondere bei einem sprungartigen Verrutschen beim Ablassen des Öldrucks, wie es obenstehend beschrieben worden ist, kann die spezielle Beschichtung die aus Kunststoff bestehenden Dichtungen 35', 35" zerstören. Die Erhöhung des Haftreibungskoeffizienten ist deshalb wenig kompatibel mit der Verwendung von Dichtungen zur Erhöhung des maximalen Ölspaltdrucks.

### Darstellung der Erfindung

Aufgabe der Erfindung ist es, eine Vorrichtung zur reibschlüssigen Kupplung zweier koaxialer Bauteile zur Verfügung zu stellen, welche die oben genannten Nachteile nicht aufweist, und insbesondere eine sichere Montage und Demontage der Kupplungsvorrichtung erlaubt, ohne sprungartiges Verrutschen der äusseren Hülse. Ebenso soll ein Verfahren zur sicheren Montage und Demontage einer solchen Kupplung bereitgestellt werden.

Diese und andere Aufgaben werden gelöst durch eine erfindungsgemässe Vorrichtung und ein erfindungsgemässes Verfahren gemäß den unabhängigen Ansprüchen. Weitere bevorzugte Ausführungsformen sind in den abhängigen Ansprüchen gegeben.

Bei einer erfindungsgemässen Vorrichtung wird das sprungartige Verrutschen verhindert, indem Sicherungsmittel angeordnet werden, welche eine maximale Verschiebungsendposition des äusseren Kupplungsteils in Richtung des zunehmenden Kegelumfangs des inneren Kupplungsteils einstellbar festlegen, oder die gewünschte Endposition des äusseren Kupplungsteils nach deren Erreichung fixieren. Diese Sicherungsmittel können verschiedenartig ausgestaltet sein, wie nachfolgend noch erläutert werden wird. Sie können beispielsweise am Hydraulikwerkzeug angeordnet sein, oder auch am dem Hydraulikwerkzeug entgegen gesetzten Ende der Kupplungsvorrichtung.

### Kurze Beschreibung der Zeichnungen

Im folgenden wird die erfindungsgemässe Vorrichtung anhand von Zeichnungen erläutert.
Figur 1 zeigt eine Schnittansicht einer Kupplungsvorrichtung nach dem Stand der Technik.
Die Figuren 2, 4 und 6 zeigen Schnittansichten von möglichen Gestaltungsformen einer erfindungsgemässen Vorrichtung, bei welcher zwei Hülsen vorgesehen sind. Die Figuren 3, 5 und 7 zeigen mögliche Gestaltungsformen einer erfindungsgemässen Vorrichtung analog zu den Figuren, 2, 4, 6, bei denen die Nabe eine konische Innenmantelfläche aufweist.
Figuren 8 und 9 zeigen zwei mögliche Gestaltungsformen einer erfindungsgemässen Vorrichtung, zur Kupplung zweier koaxialer Wellen.

### Ausführung der Erfindung

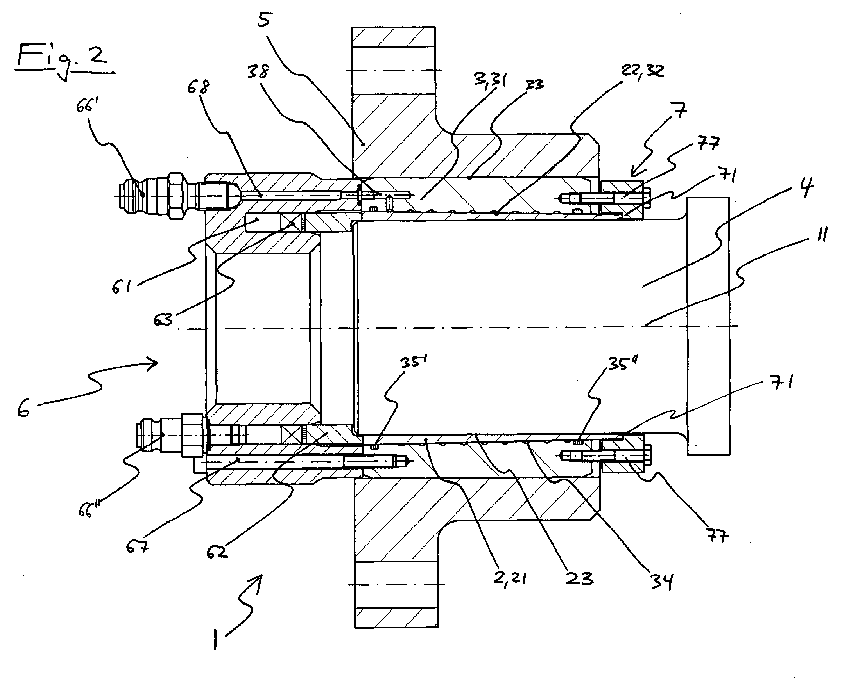

Die Figur 2 zeigt in Schnittansicht eine mögliche Ausführungsform einer erfindungsgemässen Kupplungsvorrichtung 1, welche im gezeigten Beispiel eine Welle 4 und eine Nabe 5 reibschlüssig verbindet.
Ein erstes, inneres Kupplungsteil 2 in Form einer Hülse 21 mit zylindrischer Innenfläche 23 und konischer Aussenmantelfläche 22 ist auf der Welle 4 angeordnet. Auf der inneren Hülse 21 wiederum ist ein zweites, äusseres Kupplungsteil 3 in Form einer Hülse 31 mit konischer Innenmantelfläche 32 und zylindrischer Aussenfläche 33 angeordnet. Auf der äusseren Hülse 31 ist schliesslich die Nabe 5 angeordnet, welche hier eine Flanschnabe ist. Ein Hydraulikwerkzeug 6, nämlich eine Hydraulikmutter, ist mittels Verbindungselementen 67, nämlich einer Mehrzahl von Schrauben 67, mit der äusseren Hülse 31 formschlüssig verbunden, und ist in der Lage, auf die äussere Hülse 31 eine nach links in Längsrichtung wirkende Zugkraft auszuüben. Die einzelnen Elemente der gezeigten Vorrichtung 1 entsprechen denjenigen der Vorrichtung aus Figur 1, auf deren diesbezügliche Erläuterungen hiermit verwiesen wird.
In der Vorrichtung 1 in Figur 2 ist die äussere Hülse 31 in der Endposition, in welcher sie nach Ablassen des Ölspaltdrucks verbleiben soll. Um zu verhindern, dass die äussere Hülse dabei ungewollt weiter nach links verrutscht, gezogen vom Hydraulikwerkzeug 6, ist ein Sicherungsmittel 7 vorhanden. Im gezeigten Beispiel ist dies ein auf der Welle 4 angeordneter Ring 7, welcher sich mit einem umlaufenden Absatz als Anschlagelement 71 auf einer endständigen Kante der inneren Hülse 21 abstützt. Der Ring 7 ist über Verbindungsmittel in der Form einer Mehrzahl von Schrauben 77 formschlüssig mit der äusseren Hülse 31 verbunden.
Während der Montage selber ist das Sicherungsmittel 7 nicht mit der äusseren Hülse 31 verbunden. Nach dem Erreichen der Endposition der äusseren Hülse 31 und der Nabe 5 wird der Ring nach links verschoben, bis er an der inneren Hülse 21 ansteht. Anschliessend werden die Schrauben 77 durch Bohrungen im Ring eingeführt, und in entsprechende Gewindelöcher der äusseren Hülse 31 eingeschraubt und leicht angezogen, bis kein Spiel mehr zwischen Ring 7 und innerer Hülse 21 mehr vorhanden ist. Anschliessend kann der Ölspaltdruck *p*ₛₚ gleichmässig bis auf Null reduziert werden. Obwohl nun die nach rechts wirkende Kraft des Ölspaltdrucks kleiner wird, bei gleich bleibendem Hydraulikdruck *p*_{ax,1} und Zugkraft nach links, kann die äussere Hülse nicht mehr nach links verrutschen, weil dies durch das Sicherungsmittel 7 verhindert wird.
Nach einer Wartezeit, in der das Öl vollständig aus dem Kegelspalt ausfliessen kann, kann der Hydraulikdruck *p*ₐₓ abgelassen und das Hydraulikwerkzeug 6 entfernt werden. Das Sicherungsmittel 7 verbleibt bevorzugt an Ort und Stelle. Es kann jedoch auch aus zwei oder mehr Segmenten zusammengesetzt realisiert werden, damit es nach der Montage wieder entfernt werden kann.
Bei der Demontage der erfindungsgemässen Vorrichtung 1 wird das Hydraulikwerkzeug 6 und, falls noch nicht vorhanden, das Sicherungsmittel 7 an der äusseren Hülse 41 formschlüssig befestigt. Anschliessend wird der Hydraulikdruck des Werkzeugs 6 *p*ₐₓ auf einen maximalen Wert *p*_{ax,2} hochgefahren, wobei dieser Druck bevorzugt höher ist als der höchste axiale Druck *p*_{ax,1} bei der Montage. Die dadurch entstehende Zugkraft wird zu Beginn vom Reibschluss zwischen den Hülsen 21, 31 aufgenommen. Anschliessend wird der Ölspaltdruck auf einen Wert *p*_{sp,1} erhöht, bei welchem ein ausreichender Ölspalt entsteht. Die Zugkraft wird nun vom Sicherungselement 7 aufgenommen, und damit ein Verrutschen der Hülse 31 nach links durch das Sicherungsmittel 7 verunmöglicht. Ein Verrutschen nach rechts wiederum wird durch die starke axiale Zugkraft des Hydraulikwerkzeugs 6 verhindert, wobei die Zugkraft natürlich grösser sein muss als die Kraft des Ölspaltdrucks. Anschliessend kann langsam der Hydraulikdruck *p*ₐₓ reduziert werden. Wenn nun die Zugkraft kleiner wird als die entgegengesetz gerichtete Kraft des Ölspaltdrucks, beginnt sich die äussere Hülse 31 nach rechts zu bewegen, bis zu einer Demontage-Position. Da dabei von Anfang an ein Ölspalt vorhanden ist, können keine Beschädigungen auftreten.

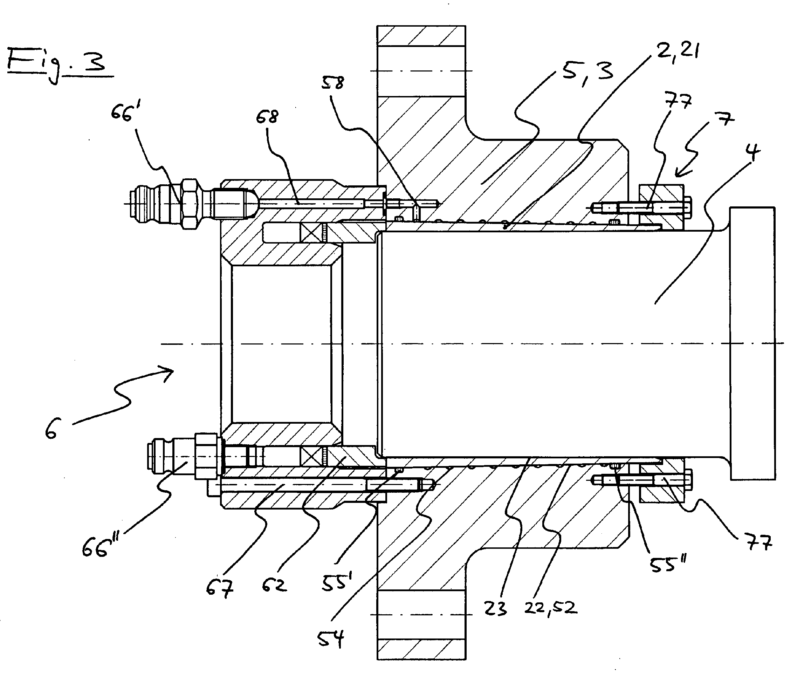

Figur 3 zeigt eine erfindungsgemässe Vorrichtung 1, welche im wesentlichen der Vorrichtung aus Figur 2 entspricht. Im gezeigten Beispiel ist jedoch keine äussere Hülse vorhanden, sondern die Nabe 5 selber ist das äussere Kupplungsteil 3, und verfügt über eine konische innere Mantelfläche 52, mit Verteilnut 54, Hydraulikleitung 58, und Dichtungen 55', 55".
Selbstverständlich lässt sich eine erfindungsgemässe Vorrichtung analog auch mit einer Welle mit konischem Zapfen realisieren, wobei dann dieser konische Zapfen selber das innere Kupplungsteil 2 ist.

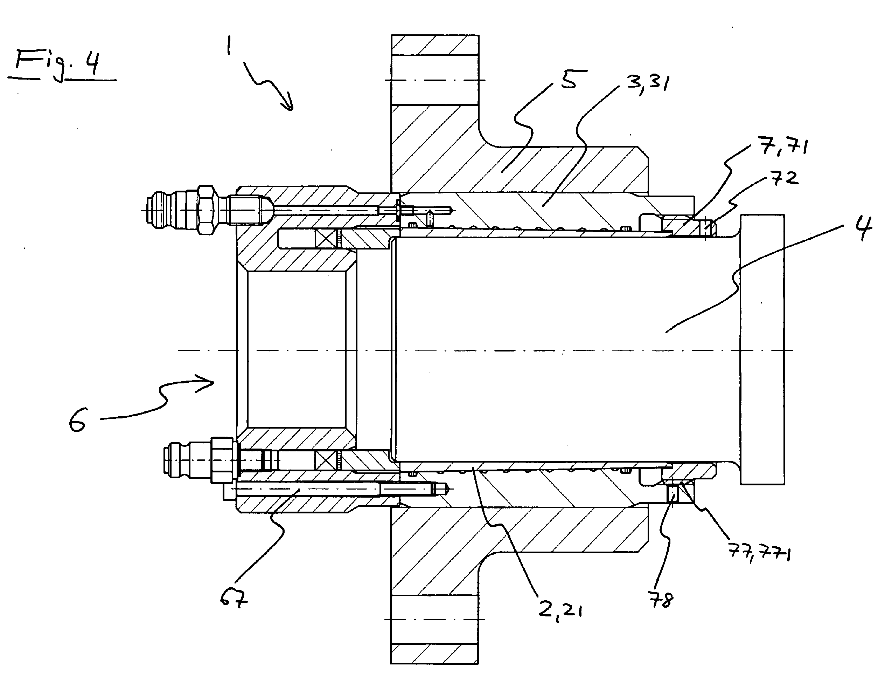

Figur 4 zeigt eine weitere mögliche Ausführungsform einer erfindungsgemässen Kupplungsvorrichtung, welche analog zu derjenigen aus Figur 2 aufgebaut ist. In diesem Fall ist jedoch das Sicherungsmittel ein Sicherungsring 7, welcher mit einem Aussengewinde 771 versehen ist, das in ein entsprechendes Innengewinde der äusseren Hülse 31 eingreift. Der Ring 7 verfügt wiederum über einen umlaufenden Absatz 71, welcher auf der endständigen Kante der inneren Hülse 21 anliegt. Die Dimensionierung des Sicherungsrings 7 sollte so gewählt sein, dass er sowohl in der Anfangsposition als auch in der Endposition leicht drehbar ist, und sich insbesondere nicht auf der Welle 4 verklemmt. Zur Betätigung des Sicherungsrings 7 verfügt das gezeigte Beispiel über radiale Bohrungen 72, über die der Ring mit einem Stift oder Hakenschlüssel gedreht werden kann. Alternativ können auch axial verlaufende Nuten, stirnseitige axiale Bohrungen oder stirnseitige radiale Nuten verwendet werden.
Die Bedienung erfolgt analog zu den bereits besprochenen Ausführungsformen. Vor dem Ablassen des Ölspalt-Hydraulikdrucks am Ende Montagevorgangs, bzw. vor dem Aufbauen des axialen Hydraulikdrucks des hydraulischen Werkzeugs 6 und des Ölspalt-Hydraulikdrucks bei der Demontage, wird der Sicherungsring 7 in das Innengewinde der äusseren Hülse 31 eingedreht, bis der Absatz 71 auf der Kante der inneren Hülse 21 aufsteht. Die äussere Hülse 31 kann sich jetzt nicht mehr weiter nach links auf die innere Hülse 21 schieben. Nach der Montage verbleibt der Sicherungsring 7 bevorzugt an Ort und Stelle. Um ein Losdrehen des Sicherungsrings während des Drehens der Welle zu verhindern, ist zu diesem Zweck in der äusseren Hülse 31 ein Gewindebolzen 78 in einer entsprechenden radialen Bohrung vorgesehen, welcher auf das Aussengewinde 771 gedreht wird, und so den Sicherungsring 7 fixiert.

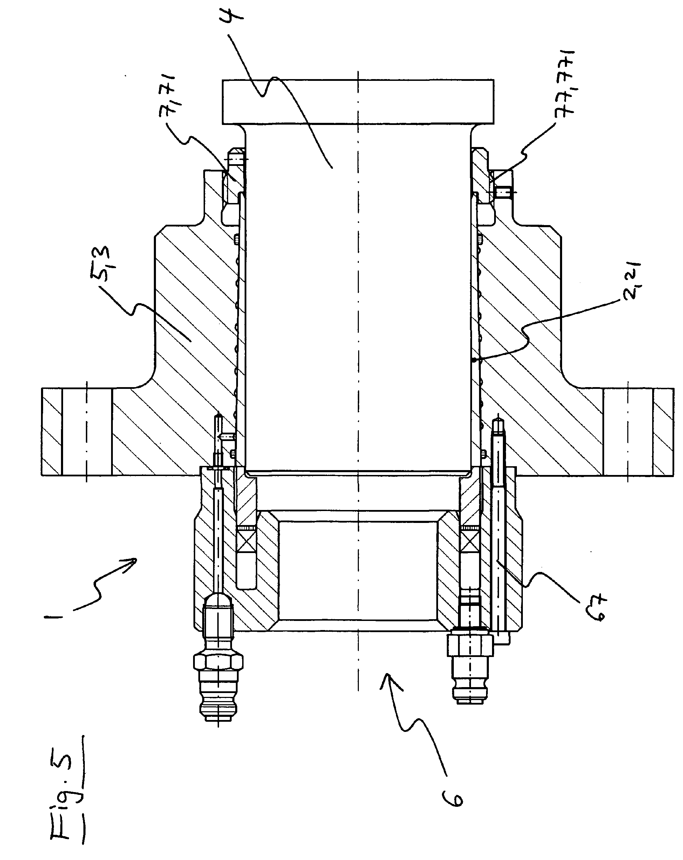

Figur 5 zeigt die Vorrichtung aus Figur 4 mit einer konischen Nabe 5 statt einer äusseren Hülse 31 als äusseres Kupplungsteil 3.

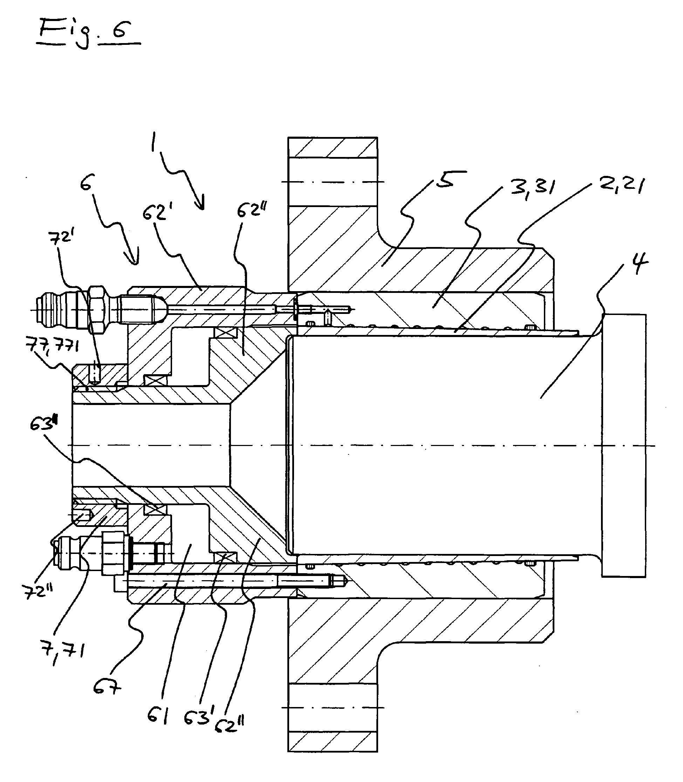

Figur 6 zeigt noch eine weitere Variante einer erfindungsgemässen Vorrichtung 1, bei welcher das Sicherungsmittel 7 am Hydraulikwerkzeug 6 angeordnet ist. Dieses besteht im Wesentlichen aus zwei Teilen 62', 62", welche eine ringförmige Hydraulikkammer 61 bilden. Das innere Teil 62" stütz sich auf der inneren Hülse 21 ab, während das äussere Teil 62' mittels Schrauben 67 formschlüssig mit der äusseren Hülse 31 verbunden ist. Das innere Teil 62" weist an seinem der Welle 4 abgewandten Ende ein Aussengewinde oder ein unterbrochenes, helixförmiges Bajonettprofil 771 auf. Auf dieses kann nach Erreichen der Endposition der äusseren Hülse 31 das Sicherungsmittel in Form einer Sicherungsmutter 7 aufgebracht und bündig auf dass äussere Teil 62' aufgedreht werden, so dass eine weitere Verschiebung des äusseren Teils 62' gegenüber dem inneren Teil 62" nach links, und damit auch der äusseren Hülse 31 gegenüber der inneren Hülse 21, nicht mehr möglich ist. Zur Betätigung kann die Sicherungsmutter 7 mit radialen 72' oder axialen 72" Bohrungen versehen werden.
Diese Variante hat den besonderen Vorteil, dass die äussere Hülse 31 einfacher aufgebaut werden kann, insbesondere ohne axiale Bohrungen oder Innengewinde, und dass kein Sicherungsmittel 7 bei der montierten Kupplungsvorrichtung 1 verbleibt, sondern beim abnehmbaren, vielfach verwendbaren Hydraulikwerkzeug 6, was die Herstellungskosten senkt.

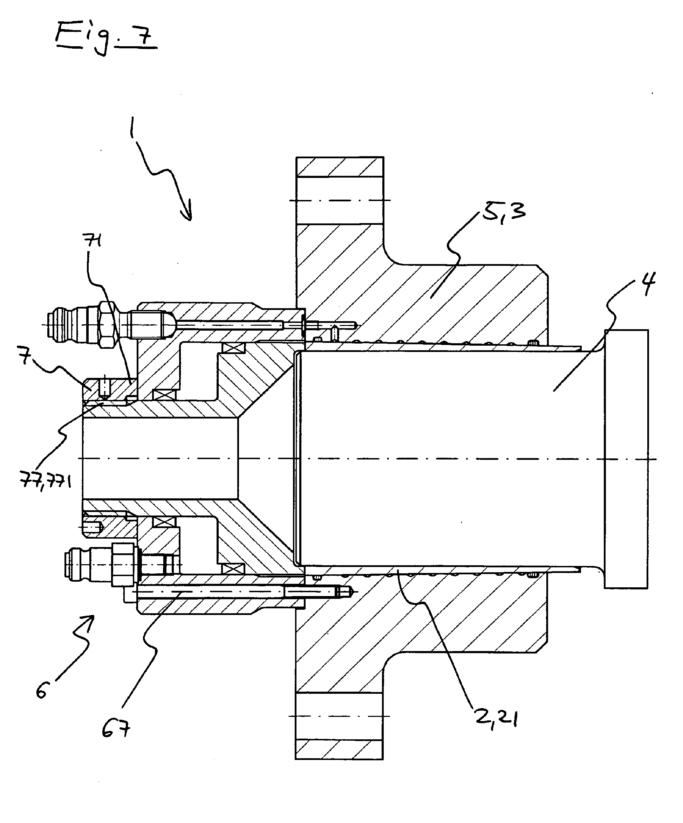

Figur 7 wiederum zeigt die Vorrichtung aus Figur 6 mit einer konischen Nabe 3 als äusserem Kupplungsteil 3.

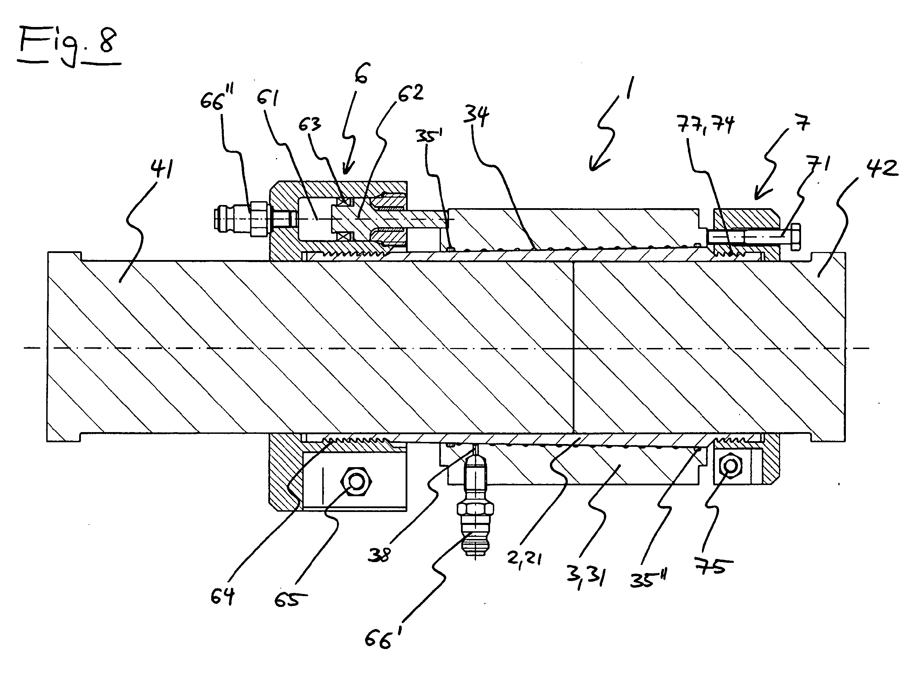

Figur 8 zeigt ein erfindungsgemässes Kupplungsteil 1 zur Verbindung zweier koaxialer Wellen 41, 42. Das hydraulische Werkzeug 6 ist mehrteilig ausgestaltet, und wird um die erste Welle 41 herum zusammengebaut, wobei die einzelnen Teile über Verbindungselemente 65, insbesondere Schraubverbindungen, verbunden werden. Das Hydraulikwerkzeug 6 ist mit der inneren Hülse 21 formschlüssig verbunden, im gezeigten Beispiel über ein Sägezahnprofil 64. Alternativ kann zu diesem Zweck natürlich auch ein Gewinde oder eine andere geeignete Befestigungsmethode verwendet werden. Im gezeigten Beispiel wird die äussere Hülse 31 nach rechts auf die innere Hülse 21 geschoben, mittels einer Mehrzahl von miteinander druckverbundenen Hydraulikzylindern 61, welche auf der äusseren Hülse 31 aufstehende Kolben 62 betätigen, und so eine axiale Schubkraft nach rechts erzeugen. Am gegenüber liegenden Ende der inneren Hülse 21 ist ein Sicherungsmittel in Form eines ebenfalls mehrteiligen Sicherungsrings 7 angeordnet, welcher über ein Sägezahnprofil 74 mit der inneren Hülse 21 verbunden ist. Nach dem Erreichen der Endposition der äusseren Hülse 31 werden Schrauben 71 in entsprechende axiale Bohrungen des Sicherungsrings 7 eingedreht, bis sie auf der äusseren Hülse 31 aufstehen, und so ein weiteres Verrutschen der Hülse nach rechts verhindern. Nach Abschluss der Montage können sowohl das Hydraulikwerkzeug 6 als auch das Sicherungsmittel 7 entfernt und für die Montage weiterer Kupplungen verwendet werden.

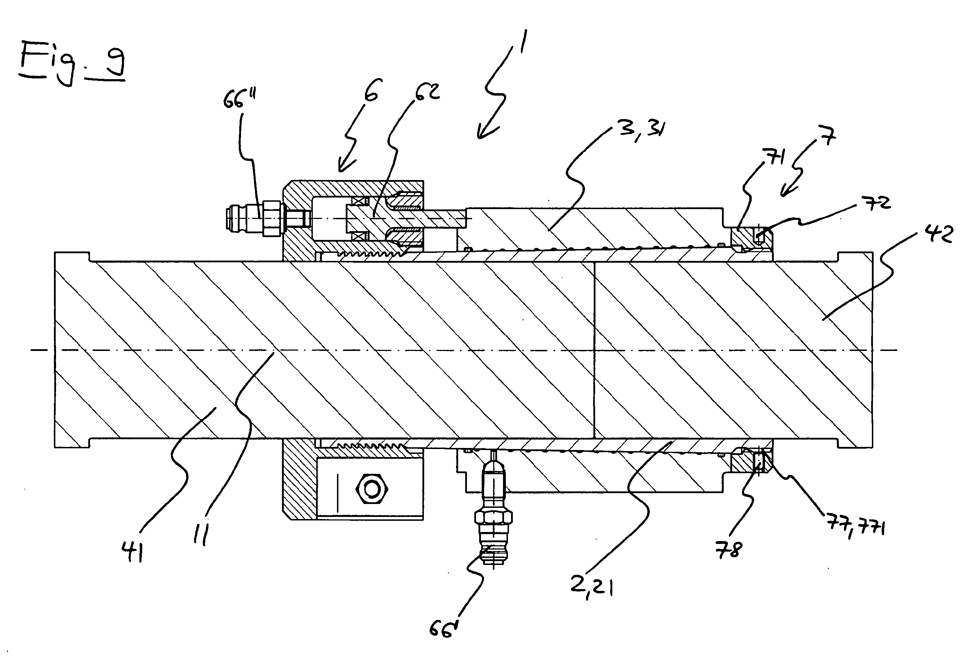

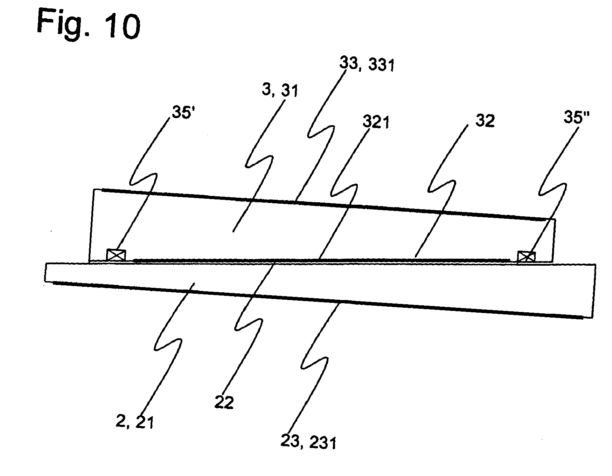

Figur 9 zeigt ebenfalls ein erfindungsgemässes Kupplungsteil 1 zur Verbindung zweier koaxialer Wellen 41, 42, analog zu Figur 8. In diesem Fall ist jedoch das Sicherungsmittel als einstückige Kontermutter 7 ausgeführt, welche auf ein entsprechendes Aussengewinde 771 der inneren Hülse 21 aufgedreht wird, bis sie auf der äusseren Hülse 31 aufsteht, und so formschlüssig ein weiteres Verrutschen der äusseren Hülse 31 nach rechts verunmöglicht. In dieser Variante verbleibt das Sicherungsmittel 7 nach der Montage an Ort und Stelle, und wird mittels eines Gewindebolzens 78 gegen ein Losdrehen gesichert.

### Liste der Bezugszeichen

- 1: Kupplungsvorrichtung
- 11: Drehachse
- 2: erstes, inneres Kupplungsteil
- 21: innere Hülse
- 22: kegelförmige äussere Mantelfläche
- 23: zylindrische Innenfläche
- 231: Haftreibungserhöhende Beschichtung
- 3: zweites, äusseres Kupplungsteil
- 31: äussere Hülse
- 32: kegelförmige, innere Mantelfläche
- 321: Haftreibungserhöhende Beschichtung
- 33: zylindrische Aussenfläche
- 331: Haftreibungserhöhende Beschichtung
- 34: Verteilnut
- 35', 35": Dichtung
- 38: Hydraulikleitung
- 4: Welle
- 41: erste Welle
- 42: zweite Welle
- 5: Nabe
- 52: kegelförmige, innere Mantelfläche
- 54: Verteilnut
- 55', 55": Dichtung
- 58: Hydraulikleitung
- 6: Hydraulikwerkzeug
- 61: Hydraulikkammer
- 62, 62', 62": Kolbenelement
- 63, 63', 63": Dichtung
- 64: Sägezahnprofil
- 65: Verbindungsmittel
- 66', 66": Hydraulikanschluss
- 67: Verbindungsmittel
- 68: Hydraulikleitung
- 69', 69": Zufuhrleitung
- 7: Sicherungsmittel
- 71: Anschlagelement
- 72, 72', 72": Bohrung
- 74: Sägezahlprofil
- 75: Verbindungsmittel
- 77: Verbindungsmittel
- 771: Gewinde
- 78: Gewindebolzen

## Patentansprüche

1. Vorrichtung (1) zur reibschlüssigen Kupplung von zwei Wellen (41, 42) mit zylindrischen Aussenflächen, die koaxial sind oder einer Welle (4) mit zylindrischer Aussenfläche und einer Nabe (5), die koaxial sind, mit einem ersten, inneren Kupplungsteil (2) mit kegelförmiger äusserer Mantelfläche (22) und einem zweiten, äusseren Kupplungsteil (3) mit kegelförmiger innerer, Mantelfläche (32, 52), wobei die beiden Kupplungsteile (2, 3) dazu geeignet sind, in Richtung einer Längsachse (11) reversibel derart aufeinander geschoben und dabei in radialer Richtung elastisch verformt zu werden, dass die kegelförmigen Mantelflächen (22, 32, 52) aufeinander aufliegen, und die zwei koaxialen Bauteile (4, 5, 41, 42) aufgrund der durch die elastische Verformung der Kupplungsteile (2, 3) verursachten radialen Kräfte über die Kupplungsteile (2, 3) miteinander reibschlüssig verbunden sind;
einem Hydraulikwerkzeug (6) mit Mitteln (61, 62, 62', 62"), mit welchen in Richtung des zunehmenden Umfangs der Mantelfläche (22) des ersten Kupplungsteils (2) eine auf das zweite Kupplungsteil (3) wirkende axiale Kraft erzeugbar ist; und
Hydraulikmitteln (34, 54, 66', 68, 58, 38), mit welchen ein ölgefüllter Spalt zwischen den beiden Mantelflächen (22, 32) erzeugbar ist, welcher eine reibungsarme Verschiebung der beiden Kupplungsteile (2, 3) zueinander erlaubt;
**gekennzeichnet durch**
Sicherungsmittel (7), mit welchen eine maximal mögliche Verschiebungsposition des zweiten Kupplungsteils (3, 31, 5) in Richtung des zunehmenden Umfangs der Mantelfläche (22) des ersten Kupplungsteils (2) einstellbar ist.

2. Vorrichtung nach Anspruch 1, **dadurch gekennzeichnet, dass** mit den Sicherungsmitteln (7) das zweite Kupplungsteil (3, 31, 5) in Richtung des zunehmenden Umfangs der Mantelfläche (22) des ersten Kupplungsteils (2) formschlüssig fixierbar ist.

3. Vorrichtung nach Anspruch 1, **dadurch gekennzeichnet, dass** die Sicherungsmittel (7) derart mit dem Hydraulikwerkzeug (6) zusammenwirken, dass ein mit dem zweiten Kupplungsteil (3, 31, 5) verbundenes Teil (62') des Hydraulikwerkzeugs (6) in Richtung des zunehmenden Umfangs der Mantelfläche (22) des ersten Kupplungsteils (2) formschlüssig fixierbar ist.

4. Verfahren zur Kupplung von zwei Wellen (41, 42), die koaxial sind, oder einer Welle (4) und einer Nabe (5), die koaxial sind, mit einer Vorrichtung (1) nach einem der Ansprüche 1 bis 3,
umfassend die Schritte:
- Bereitstellen der beiden Bauteile (4, 5, 41, 42) und der Vorrichtung (1) in einer Anfangsposition;
- Abwechselnde, schrittweise Erhöhung des Axial-Hydraulikdrucks *p*ₐₓ und des Ölspalt-Hydraulikdrucks *p*ₛₚ auf p_{ax,1} bzw. p_{sp,1}, bis das zweite Kupplungsteil (3) die gewünschte Endposition erreicht hat;
- Anbringen der Sicherungsmittel (7), so dass eine weitere Verschiebung des zweiten Kupplungsteils (3) in Richtung des zunehmenden Umfangs der Mantelfläche (22) des ersten Kupplungsteils (2) nicht mehr möglich ist;
- Reduzierung des Ölspalt-Hydraulikdrucks *p*ₛₚ auf 0;
- Reduzierung des Axial-Hydraulikdruck *p*ₐₓ auf 0.

5. Verfahren nach Anspruch 4, **dadurch gekennzeichnet, dass** vor der Reduzierung des Ölspalt-Hydraulikdrucks *p*ₛₚ der Axial-Hydraulikdruck *p*ₐₓ auf einen Wert *p*_{ax,2} > *p*_{ax,1} erhöht wird.

6. Verfahren zur Entkupplung von zwei Wellen (41, 42), die koaxial sind, oder einer Welle (4) und einer Nabe (5), die koaxial sind, mit einer Vorrichtung (1) nach einem der Ansprüche 1 bis 3, umfassend die Schritte:
- Bereitstellen des Hydraulikwerkzeugs (6);
- Anbringen der Sicherungsmittel (7), so dass eine weitere Verschiebung des zweiten Kupplungsteils (3) in Richtung des zunehmenden Umfangs der Mantelfläche (22) des ersten Kupplungsteils (2) nicht mehr möglich ist;
- Erhöhung des Axial-Hydraulikdruck *p*ₐₓ auf *p*_{ax,2};
- Erhöhung des Ölspalt-Hydraulikdrucks *p*ₛₚ auf einen Wert *p*_{sp,1}, bei welchem eine axiale Schub- bzw. Zugkraft des Hydraulikwerkzeugs grösser ist als eine aus dem Ölspaltdruck resultierende, entgegen gesetzte Kraft;
- Abwechselnde, schrittweise Reduzierung des Axial-Hydraulikdrucks *p*ₐₓ, und des Ölspalt-Hydraulikdrucks *p*ₛₚ, bis das zweite Kupplungsteil (3) die Anfangsposition erreicht hat;
- Reduzierung des Ölspalt-Hydraulikdrucks *p*ₛₚ und des Axial-Hydraulikdruck *p*ₐₓ auf 0.

## Claims

1. A device (1) for frictionally coupling two shafts (41, 42) with cylindrical outer surfaces, which are coaxial or a shaft (4) with a cylindrical outer surface and a hub (5), which are coaxial, with a first, inner coupling part (2) having a conical outer peripheral surface (22) and a second, outer coupling part (3) having a conical inner peripheral surface (35, 52), wherein the two coupling parts (2, 3) are suitable to be reversibly pushed onto one another in the direction of a longitudinal axis (11) and thereby to be elastically deformed in radial direction such that the conical peripheral surfaces (22, 32, 52) lie on one another, and the two axial components (4, 5, 41, 42) are frictionally connected with one another via the coupling parts (2, 3) owing to the radial forces caused by the elastic deformation of the coupling parts (2, 3); a hydraulic tool (6) with means (61, 62, 62', 62") by which an axial force acting on the second coupling part (3) can be produced in the direction of the increasing circumference of the peripheral surface (22) of the first coupling part (2); and hydraulic means (34, 54, 66', 68, 58, 38), by which an oil-filled clearance is able to be produced between the two peripheral surfaces (22, 32), which permits a low-friction displacement of the two coupling parts (2, 3) with respect to one another;
**characterized by**
securing means (7), by which a maximum possible displacement position of the second coupling part (3, 31, 5) is able to be adjusted in the direction of the increasing circumference of the peripheral surface (22) of the first coupling part (2).

2. The device according to Claim 1, **characterized in that** the second coupling part (3, 31, 5) is able to be fixed in a form-fitting manner by the securing means (7) in the direction of the increasing circumference of the peripheral surface (22) of the first coupling part (2).

3. The device according to Claim 1, **characterized in that** the securing means (7) cooperate with the hydraulic tool (6) such that a part (62') of the hydraulic tool (6), connected with the second coupling part (3, 31, 5), is able to be fixed in a form-fitting manner in the direction of the increasing circumference of the peripheral surface (22) of the first coupling part (2).

4. A method for coupling two shafts (41, 42), which are coaxial, or a shaft (4) and a hub (5), which are coaxial, with a device (1) according to one of Claims 1 to 3,
comprising the steps:
- providing the two components (4, 5, 41, 42) and the device (1) in an initial position;
- alternate, stepwise increase of the axial hydraulic pressure *p*ₐₓ and of the oil-clearance hydraulic pressure *p*ₛₚ to *p*_{ax,1} or respectively *p*_{sp,1}, until the second coupling part (3) has reached the desired end position;
- mounting the securing means (7), so that a further displacement of the second coupling part (3) in the direction of the increasing circumference of the peripheral surface (22) of the first coupling part (2) is no longer possible;
- reducing the oil-clearance hydraulic pressure *p*ₛₚ to 0;
- reducing the axial hydraulic pressure *p*ₐₓ to 0.

5. The method according to Claim 4, **characterized in that** before the reduction of the oil-clearance hydraulic pressure *p*ₛₚ, the axial hydraulic pressure *p*ₐₓ is increased to a value *p*_{ax,2} > *p*_{ax,1}.

6. A method for uncoupling two shafts (41, 42), which are coaxial, or a shaft (4) and a hub (5), which are coaxial, with a device (1) according to one of Claims 1 to 3, comprising the steps:
- providing the hydraulic tool (6);
- mounting the securing means (7), so that a further displacement of the second coupling part (3) in the direction of the increasing circumference of the peripheral surface (22) of the first coupling part (2) is no longer possible;
- increasing the axial hydraulic pressure *p*ₐₓ to *p*_{ax, 2} ;
- increasing the oil-clearance hydraulic pressure *p*ₛₚ to a value *p*_{sp,1}, in which an axial thrust- or respectively tensile force of the hydraulic tool is greater than an opposed force resulting from the oil-clearance pressure;
- alternate, stepwise reduction of the axial hydraulic pressure *p*ₐₓ, and of the oil-clearance hydraulic pressure *p*ₛₚ, until the second coupling part (3) has reached the initial position;
- reduction of the oil-clearance hydraulic pressure *p*ₛₚ and of the axial hydraulic pressure *p*ₐₓ to 0.

## Revendications

1. Dispositif (1) pour l'accouplement à friction de deux arbres (41, 42) avec des surfaces extérieures cylindriques, qui sont coaxiaux, ou d'un arbre (4) avec surface extérieure cylindrique et d'un moyeu (5), qui sont coaxiaux, comprenant un premier élément d'accouplement (2) interne avec surface d'enveloppe (22) extérieure de forme sphérique et une seconde partie d'accouplement (3) extérieure avec surface d'enveloppe (32, 52) de forme sphérique, les deux parties d'accouplement (2, 3) étant appropriées l'une par rapport à l'autre, pouvant être poussées en direction d'un axe longitudinal (11) de façon réversible l'une sur l'autre et étant déformées alors élastiquement dans le sens radial, de telle sorte que les surfaces d'enveloppe (22, 32, 52) sphériques reposent les unes sur les autres, et les deux composants (4, 5, 41, 42) coaxiaux sont reliés l'un à l'autre par friction au moyen des parties d'accouplement (2, 3) sous l'effet des forces radiales, provoquées par la déformation élastique des parties d'accouplement (2, 3) ;
un outil hydraulique (6) doté de moyens (61, 62, 62', 62"), avec lesquels une force axiale, agissant sur la seconde partie d'accouplement (3), peut être générée en direction du pourtour croissant de la surface d'enveloppe (22) de la première partie d'accouplement (2) ; et
des moyens hydrauliques (34, 54, 66', 68, 58, 38), avec lesquels une fente remplie d'huile entre les deux surfaces d'enveloppe (22, 32) peut être générée, laquelle fente permet un coulissement sans friction des deux parties d'accouplement (2, 3) l'une par rapport à l'autre ;
**caractérisé par**
des moyens de blocage (7), avec lesquels une position de coulissement maximale possible de la seconde partie d'accouplement (3, 31, 5) en direction du pourtour croissant de la surface d'enveloppe (22) de la première partie d'accouplement (2) peut être réglée.

2. Dispositif selon la revendication 1, **caractérisé en ce que**, avec les moyens de blocage (7), la seconde partie d'accouplement (3, 31, 5) peut être fixée par complémentarité de forme en direction du pourtour croissant de la surface d'enveloppe (22) de la première partie d'accouplement (2).

3. Dispositif selon la revendication 1, **caractérisé en ce que** les moyens de blocage (7) coopèrent avec l'outil hydraulique (6), de telle sorte qu'une partie (62'), reliée à la seconde partie d'accouplement (3, 31, 5), de l'outil hydraulique (6) peut être fixée par complémentarité de formes en direction du pourtour croissant de la surface d'enveloppe (22) de la première partie d'accouplement (2).

4. Procédé pour l'accouplement de deux arbres (41, 42), qui sont coaxiaux, ou d'un arbre (4) et d'un moyeu (5), qui sont coaxiaux, avec un dispositif (1) selon l'une des revendications 1 à 3,
comprenant les étapes suivantes :
- mise à disposition des deux composants (4, 5, 41, 42) et du dispositif (1) dans une position initiale ;
- élévation alternative et progressive de la pression hydraulique axiale *p*ₐₓ et de la pression hydraulique de fente d'huile *p*ₛₚ jusqu'à p_{ax,1} ou p_{sp,1}, jusqu'à ce que la seconde partie d'accouplement (3) ait atteint la position extrême souhaitée ;
- mise en place des moyens de blocage (7), de sorte qu'un nouveau coulissement de la seconde partie d'accouplement (3) en direction du pourtour croissant de la surface d'enveloppe (22) de la première partie d'accouplement (2) n'est plus possible ;
- réduction de la pression hydraulique de fente d'huile *p*ₛₚ jusqu'à 0 ;
- réduction de la pression hydraulique axiale *p*ₐₓ jusqu' à 0.

5. Procédé selon la revendication 4, **caractérisé en ce que**, avant la réduction de la pression hydraulique, de fente d'huile *p*ₛₚ, la pression hydraulique axiale *p*ₐₓ est augmentée jusqu'à une valeur *p*_{ax,2} > *p*_{ax,1}.

6. Procédé pour le désaccouplement de deux arbres (41, 42), qui sont coaxiaux, ou d'un arbre (4) et d'un moyeu (5), qui sont coaxiaux, avec un dispositif (1) selon l'une des revendications 1 à 3, comprenant les étapes suivantes :
- mise à disposition de l'outil hydraulique (6) ;
- mise en place des moyens de blocage (7), de sorte qu'un nouveau coulissement de la seconde partie d'accouplement (3) en direction du pourtour croissant de la surface d'enveloppe (22) de la première partie d'accouplement (2) n'est plus possible ;
- augmentation de la pression hydraulique axiale *p*ₐₓ jusqu' à *p*_{ax,2} ;
- augmentation de la pression hydraulique de fente d'huile *p*ₛₚ jusqu'à une valeur *p*_{sp,1}, à laquelle une force de poussée ou de traction axiale de l'outil hydraulique est supérieure à une force opposée résultant de la pression de fente d'huile ;
- réduction alternative et progressive de la pression hydraulique axiale *p*ₐₓ, et de la pression hydraulique de fente d'huile *p*ₛₚ, jusqu'à ce que la seconde partie d'accouplement (3) ait atteint la position initiale ;
- réduction de la pression hydraulique de fente d'huile *p*ₛₚ et de la pression hydraulique axiale *p*ₐₓ jusqu'à 0.
